# EUROPÄISCHE PATENTSCHRIFT

(11) **EP 2 574 771 B1**
(45) Veröffentlichungstag und Bekanntmachung des Hinweises auf die Patenterteilung: **14.05.2014**
(21) Anmeldenummer: 12185322.0
(22) Anmeldetag: 21.09.2012
(51) Int. Cl.: F03B 3/18, F03B 13/18, F03B 13/22

(54) **Kompressions-turbine**
Compression turbine
Turbine de compression

(30) Priorität: 29.09.2011 AT 53311 U
(43) Veröffentlichungstag der Anmeldung: 03.04.2013
(73) Patentinhaber: Hänfling, Manfred, 3100 St. Pölten (AT)
(72) Erfinder: Hänfling, Manfred, 3100 St. Pölten (AT)
(74) Vertreter: Babeluk, Michael

(56) Entgegenhaltungen:
- EP-A1- 2 136 072
- WO-A1-02/092919
- WO-A1-2005/035977
- DE-U1-202009 010 280
- US-A- 3 687 567
- US-A- 3 983 404

## Beschreibung

Die Erfindung betrifft eine Wasserkraftmaschine gemäß dem Oberbegriff von Patentanspruch 1. Insbesondere besitzt die Wasserkraftmaschine mindestens ein im Wesentlichen zylindrisches Laufrad, das in einem Strömungskanal angeordnet ist, der aus einem Einströmabschnitt, einem Umlenkabschnitt und aus einem Ausströmabschnitt besteht.

Wasserkraftwerke sind typischerweise dafür ausgelegt, dass eine Wasserströmung kontinuierlich in einer Richtung vorliegt, und durch Turbinen in mechanische Arbeit umgesetzt wird. Andererseits sind Gezeitenkraftwerke bekannt, bei denen sich die Wasserströmung in der Regel im Abstand von mehreren Stunden umkehrt, innerhalb dieser Ebbe- und Flutperioden jedoch die Richtung beibehält.

Die Energie von Gewässern, die beispielsweise im Küstenbereich bedingt durch eine Wellenbewegung mit einer Periode in der Größenordnung von Sekunden hin- und herströmen, kann jedoch mit bestehenden Wasserkraftmaschinen nicht oder nur unzureichend ausgenützt werden.

Die DE 20 2009 010280 A offenbart eine Wasserkraftmaschine gemäß dem Oberbegriff von Patentanspruch 1. Der Wirkungsgrad dieser Maschine ist unzureichend. Dies gilt auch für alternative Lösungen, wie sie aus der US 3,687,567 A oder der WO 02/092919 A bekannt sind.

Aufgabe der vorliegenden Erfindung ist es, eine Wasserkraftmaschine zu schaffen, die in der Lage ist, instationäre Wasserströmungen mit hohem Wirkungsgrad auszunützen.

Erfindungsgemäß wird diese Aufgabe durch eine Wasserkraftmaschine gemäß Patentspruch 1 gelöst.

Insbesondere ist vorgesehen, dass der Einströmabschnitt und der Ausströmabschnitt so angeordnet sind, dass das Laufrad teilweise im Einströmabschnitt und teilweise im Ausströmabschnitt angeordnet ist. Das Wasser tritt dabei in den Eintrittsabschnitt ein, treibt das Laufrad an einer seiner Seiten an, wird im Umlenkabschnitt umgelenkt, und treibt das Laufrad erneut an der an seiner gegenüberliegenden Seite an. Durch die besondere Konstruktion ist es möglich, den wechselnden Strömungsverhältnissen Rechnung zu tragen und so auch eine Wasserkraftmaschine darzustellen, die bei instationärer Strömung effizient arbeitet.

Konstruktiv besonders günstig ist es, wenn der Einströmabschnitt unmittelbar oberhalb des Ausströmabschnitts angeordnet ist.

Die Ausbeute an Energie kann insbesondere dadurch erhöht werden, dass mehrere Laufräder hintereinander angeordnet sind.

Eine Optimierung der Anströmverhältnisse wird gemäß einer besonders bevorzugten Ausführungsvariante der vorliegenden Erfindung dadurch erreicht, dass der Einströmabschnitt und der Ausströmabschnitt jeweils in einen gemeinsamen Strömungskanal münden, in dem eine schwenkbare Klappe angeordnet ist, die den Strömungskanal in einen Zustromkanal und einen Abstromkanal unterteilt. Die schwenkbare Klappe verändert dabei ihre Stellung in Abhängigkeit von den Strömungs- und Druckverhältnissen im Einlaufbereich, so dass beispielsweise bei hohem Wasserdruck primär der Einströmabschnitt frei gegeben wird, um das Wasser in der Wasserkraftmaschine aufzunehmen. Sobald der Druck im Einlaufbereich abfällt, wird der Ausströmabschnitt weiter geöffnet, um so eine Saugwirkung zu erzeugen, durch die das Wasser aus der Wasserkraftmaschine herausgezogen wird.

Besonders günstig ist es, wenn die schwenkbare Klappe durch eine Feder in eine Richtung vorgespannt ist, in dem der Ausströmabschnitt geschlossen ist. Es ist jedoch festzuhalten, dass es keineswegs notwendig ist, dass der Ausströmabschnitt vollkommen schließbar ist. Es ist ausreichend, wenn die schwenkbare Klappe die Querschnitte zwischen Einströmabschnitt und Ausströmabschnitt wesentlich verändern kann, beispielsweise zwischen einem Verhältnis 80 zu 20, bis 20 zu 80.

Es ist für die erfindungsgemäße Lösung wesentlich, dass im Bereich des Umlenkabschnittes ein elastisches Element vorgesehen ist, das das Volumen des Umlenkabschnitts verändert. Auf diese Weise können die sich ändernden Volumenströme dynamisch ausgeglichen werden. Teilströme können auch zwischen Einströmabschnitt und Ausströmabschnitt über die Laufräder ausgetauscht werden.

Eine weitere Optimierung des Wirkungsgrads kann dadurch erreicht werden, dass der Einströmabschnitt eine obere Abdeckung aufweist, an deren stromaufwärtiger Seite eine schwenkbare Steuerklappe angeordnet ist. Auf diese Weise kann die Belastung der Wasserkraftmaschine eingestellt werden, so dass bei geringerer Strömungsgeschwindigkeit die Steuerklappe weit geöffnet wird, und dadurch eine höhere Mindestleistung erreicht wird. Andererseits kann bei sehr hohen Strömungsgeschwindigkeiten die Steuerklappe abgesenkt, oder auch völlig geschlossen werden, um eine Beschädigung der Bauteile durch Überlastung zu vermeiden.

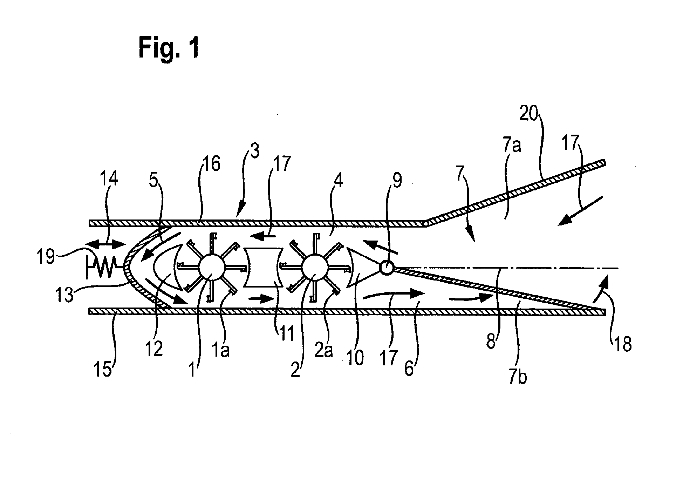

In der Folge wird die vorliegende Erfindung anhand des in der Figur dargestellten Ausführungsbeispiels näher erläutert.

Die Wasserkraftmaschine, die in der Figur dargestellt ist, besitzt zwei Laufräder 1, 2, die hintereinander in einem Strömungskanal 3 angeordnet sind. Der Strömungskanal 3 besteht aus einem Einströmabschnitt 4, einem Umlenkabschnitt 5 und einem Ausströmabschnitt 6, die im Betrieb der Wasserkraftmaschine nacheinander durchströmt werden. Stromaufwärts des Einströmabschnitts 4, bzw. stromabwärts des Ausströmabschnitts 6 ist ein gemeinsamer Strömungskanal 7 vorgesehen, der durch eine schwenkbare Klappe 8 in einen Zustromkanal 7a und einen Abstromkanal 7b unterteilt ist.

Das pulsierende anströmende Strömungsmedium gelangt über den Zustromkanal 7a in den Einströmabschnitt 4 und wirkt zunächst auf die Schaufeln 2a des zweiten Laufrads 2 und danach auf die Schaufeln 1a des ersten Laufrads 1 ein, um diese anzutreiben. Danach gelangt das Strömungsmedium, dessen Strömung durch die Pfeile 17 angedeutet ist, in einen Umlenkabschnitt 5, um von dort in den Ausströmabschnitt 6 zu gelangen. Die Laufräder 1, 2 ragen auch in den Ausströmabschnitt 6, so dass durch diese Strömung der Antrieb der Laufräder 1, 2 verstärkt wird. Um das Ausströmen des Strömungsmediums zu ermöglichen, wird bei entsprechenden Druck im Abstromkanal 7b die schwenkbare Klappe 8 angehoben, wodurch eine Strömungsverbindung mit der Umgebung hergestellt wird. Die schwenkbare Klappe 8 ist an einem Strömungsleitkörper 10 über ein Gelenk 9 angebracht und durch eine nicht dargestellte Feder in die in der Fig. dargestellte Stellung vorgespannt. Der Strömungsleitkörper 10 hat einerseits die Aufgabe, den Einströmabschnitt vom Ausströmabschnitt zu trennen und andererseits eine optimale Anströmung des zweiten Laufrads 2 gewährleisten. Zwischen dem ersten Laufrad 1 und den zweiten Laufrad 2 ist ein weiterer Strömungsleitkörper 11 vorgesehen, und zwischen dem ersten Laufrad 1 und dem Umlenkabschnitt 5 ist ein dritter Strömungsleitkörper 12 angeordnet.

Der Umlenkabschnitt 5 ist an der Seite, die dem dritten Strömungsleitkörper 12 gegenüberliegt, durch einen Kolben 13 abgeschlossen, der durch ein elastisches Element 19 in Richtung des Umlenkabschnitts 5 vorgespannt ist. Der Kolben 13 ist somit in Richtung des Doppelpfeils 14 beweglich, so dass das Volumen des Umlenkabschnitts 5 und damit des gesamten Strömungskanals 3 veränderlich ist.

Die Wasserkraftmaschine ist vorzugsweise an einem ebenen Grund 15 eines pulsierenden Gewässers, wie etwa eines Strandabschnitts vorgesehen und durch eine obere Abdeckung 16 abgeschlossen. Eine sich nach außen hin erweiternde Einlaufklappe 20 schließt den Strömungskanal 7 nach oben hin ab.

In der Fig. Ist eine Stellung dargestellt, in der das Strömungsmedium ansteuern und vor allem im Bereich des Einströmabschnitts 4 die Laufräder 1, 2 antreibt.

Der Kolben 13 wird dabei nach links bewegt, oh dass sich das Volumen des Umlenkabschnitts 5 vergrößert. Sobald der Druck im Zustromkanal 7a abnimmt, wird das Strömungsmedium durch die Wirkung des elastischen Elementes 19 in den Ausströmabschnitt 6 gedrückt und die schwenkbare Klappe acht öffnet durch Bewegung in Richtung des Pfeils 18. Bei korrekter Abstimmung der Geometrie und der Federkraft des elastischen Elementes 19 kommt die Vorrichtung in Resonanz mit dem Strömungsmedium, so dass ein kontinuierlicher Betrieb erreicht wird. Auf diese Weise ist es möglich, auch bei zyklisch schwankenden Strömungsverhältnissen eine konstante Stromproduktion zu erzielen, wenn die Laufräder 1, 2 an Generatoren angeschlossen sind. Eine an sich bekannte schraubenförmige Ausbildung der Leitschaufeln trägt weiter zur Konstanz und Geräuschminderung bei.

Die vorliegende Erfindung ermöglicht es, pulsierende Wasserströmungen beispielsweise in Küstengewässern effizient zur Stromerzeugung zu nutzen.

## Patentansprüche

1. Wasserkraftmaschine mit mindestens einem im Wesentlichen zylindrischen Laufrad (1, 2), das in einem Strömungskanal (3) angeordnet ist, der aus einem Einströmabschnitt (4), einem Umlenkabschnitt (5) und aus einem Ausströmabschnitt (6) besteht, wobei das Laufrad (1, 2) teilweise im Einströmabschnitt (4) und teilweise im Ausströmabschnitt (6) angeordnet ist, **dadurch gekennzeichnet, dass** im Bereich des Umlenkabschnitts (5) ein elasisches Element (19) vorgesehen ist, das das Volumen des Umlenkabschnitts (5) vorzugsweise über einen Kolben (13) verändert.

2. Wasserkraftmaschine nach Anspruch 1, **dadurch gekennzeichnet, dass** der Einströmabschnitt (4) unmittelbar oberhalb des Ausströmabschnitts (6) angeordnet ist.

3. Wasserkraftmaschine nach Anspruch 1 oder 2, **dadurch gekennzeichnet, dass** mehrere Laufräder (1, 2) hintereinander angeordnet sind.

4. Wasserkraftmaschine nach einem der Ansprüche 1 bis 3, **dadurch gekennzeichnet, dass** der Einströmabschnitt (4) und der Ausströmabschnitt (6) jeweils in einen gemeinsamen Strömungskanal (7) münden, in dem eine schwenkbare Klappe (8) angeordnet ist, die den Strömungskanal (7) in einen Zustromkanal (7a) und einen Abstromkanal (7b) unterteilt.

5. Wasserkraftmaschine nach Anspruch 4, **dadurch gekennzeichnet, dass** die schwenkbare Klappe (8) an einem Strömungsleitkörper (10) angelenkt ist, der an den Einströmabschnitt (4), den Ausströmabschnitt (6) und ein Laufrad (2) angrenzt.

6. Wasserkraftmaschine nach Anspruch 4 oder 5, **dadurch gekennzeichnet, dass** die schwenkbare Klappe (8) durch eine Feder in eine Richtung vorgespannt ist, in der der Ausströmabschnitt (6) geschlossen ist.

7. Wasserkraftmaschine nach einem der Ansprüche 1 bis 6, **dadurch gekennzeichnet, dass** der Einströmabschnitt (4) eine obere Abdeckung (16) aufweist, an deren stromaufwärtiger Seite eine schwenkbare Steuerklappe (20) angeordnet ist.

8. Wasserkraftmaschine nach einem der Ansprüche 1 bis 7, **dadurch gekennzeichnet, dass** das Laufrad (1, 2) zylindrisch ausgebildet und schraubenförmig verdreht ist.

## Claims

1. Hydraulic engine with at least one essentially cylindrical paddle wheel (1, 2) which is disposed in a flow channel (3), said channel comprising an inflow section (4), a reversing section (5) and an outflow section (6), and the paddle wheel (1, 2) being located partly in the inflow section (4) and partly in the outflow section (6), **characterised in that** an elastic element (19) is provided in the area of the reversing section (5), which element varies the volume of the reversing section (5) preferably by means of a piston (13).

2. Hydraulic engine according to claim 1, **characterised in that** the inflow section (4) is located immediately above the outflow section (6).

3. Hydraulic engine according to claim 1 or 2, **characterised in that** a plurality of paddle wheels (1, 2) are provided in serial arrangement.

4. Hydraulic engine according to any of claims 1 to 3, **characterised in that** the inflow section (4) and the outflow section (6) each open into a common flow channel (7), in which a tiltable flap (8) is disposed which partitions the flow channel (7), thus creating an inflow channel (7a) and an outflow channel (7b).

5. Hydraulic engine according to claim 4, **characterised in that** the tiltable flap (8) is hinged on a flow-guiding body (10), which is adjacent to the inflow section (4), the outflow section (6) and one of the paddle wheels (2).

6. Hydraulic engine according to claim 4 or 5, **characterised in that** the tiltable flap (8) is preloaded by a spring in such a way that the outflow section (6) is shut.

7. Hydraulic engine according to any of claims 1 to 6, **characterised in that** the inflow section has an upper cover (16) at whose upstream end a tiltable control flap is attached.

8. Hydraulic engine according to any of claims 1 to 7, **characterised in that** the paddle wheel (1, 2) is cylindrical and helically twisted.

## Revendications

1. Moteur hydraulique comportant au moins une roue à aubes (1, 2) essentiellement cylindrique montée dans un canal d'écoulement (3) constituée d'un segment d'entrée (4) d'un segment de renvoi (5) et d'un segment de sortie (6), la roue à aubes (1, 2) étant montée partiellement dans le segment d'entrée (4) et partiellement dans le segment de sortie (6),
**caractérisé en ce qu'**
il est prévu dans la zone du segment de renvoi (5) un élément élastique (19) qui modifie le volume du segment de renvoi (5) de préférence par l'intermédiaire d'un piston (13).

2. Moteur hydraulique conforme à la revendication 1,
**caractérisé en ce que**
le segment d'entrée (4) est situé directement au-dessus du segment de sortie (6).

3. Moteur hydraulique conforme à la revendication 1 ou 2,
**caractérisé en ce que**
plusieurs roues à aubes (1, 2) sont montées en série.

4. Moteur hydraulique conforme à l'une des revendications 1 à 3,
**caractérisé en ce que**
le segment d'entrée (4) et le segment de sortie (6) débouchent respectivement dans un canal d'écoulement commun (7) dans lequel est monté un volet pivotant (8) qui subdivise le canal d'écoulement (7) en un canal amont (7a) et un canal aval (7b).

5. Moteur hydraulique conforme à la revendication 4,
**caractérisé en ce que**
le volet pivotant (8) est articulé sur un corps de guidage (10) de l'écoulement qui est situé au voisinage du segment d'entrée (4), du segment de sortie (6) et d'une roue à aube (2).

6. Moteur hydraulique conforme à la revendication 4 ou 5,
**caractérisé en ce que**
le volet pivotant (8) est précontraint par un ressort dans une direction dans laquelle le segment de sortie (6) est fermé.

7. Moteur hydraulique conforme à l'une des revendications 1 à 6,
**caractérisé en ce que**
le segment d'entrée (4) comporte un recouvrement supérieur (16) sur la face amont duquel est monté un volet de commande pivotant (20).

8. Moteur hydraulique conforme à l'une des revendications 1 à 7,
**caractérisé en ce que**
la roue à aubes (1, 2) est cylindrique et est conformée en hélice.
